Europäisches Patentamt

European Patent Office

Office européen des brevets

(19)

(11) **EP 0 733 879 A1**

(12) **EUROPEAN PATENT APPLICATION**

(43) Date of publication:
25.09.1996 Bulletin 1996/39

(51) Int. Cl.$^6$: **G01C 5/06**

(21) Application number: 96104362.7

(22) Date of filing: 19.03.1996

(84) Designated Contracting States:
CH DE ES FR GB LI

(30) Priority: 20.03.1995 JP 60539/95

(71) Applicant: CATEYE Co., Ltd.
Osaka-shi, Osaka (JP)

(72) Inventor: Maeyama, Hachiro
Kitakatsuragi-gun, Nara (JP)

(74) Representative: Prüfer, Lutz H., Dipl.-Phys. et al
Harthauser Strasse 25d
81545 München (DE)

(54) **Altitude measuring device**

(57) In an altitude measuring device mounted on a movable body, the following process takes place. Based on a timing signal output at every second, pressure data is obtained by a sensor (504). Speed of the movable body is detected by a speed detecting portion (507). If the speed is not 0, a correcting value $P_{offset}$ is subtracted from pressure data $P_{sensor}$ obtained by the sensor (504) by means of CPU (501), and a corrected pressure data $p_{adj}$ is calculated. Altitude value is calculated based on the corrected pressure data. The calculated altitude value is displayed on a display. Meanwhile, if the speed of the movable body is 0, the value obtained by subtracting corrected pressure data $P_{adj}$ from the measured pressure data $P_{sensor}$ is used as the correcting value $P_{offset}$. Therefore, the altitude value displayed while the movable body is stopped does not change.

*FIG.1*

START

TIMING SIGNAL PROVIDED AT EVERY SECOND — S101

READ PRESSURE DATA Psensor FROM PRESSURE SENSOR — S102

SPEED=0? — S103

YES → UP-DATE Poffset VALUE Poffset=Psensor-Padj — S107

NO

Padj= Psensor-Poffset — S104

CALCULATE ALTITUDE FROM Padj — S105

DISPLAY ALTITUDE ON LCD — S106

RET

EP 0 733 879 A1

**Description**

BACKGROUND OF THE INVENTION

Field of the Invention

The present invention relates to an altitude measuring device, and more specifically, to an altitude measuring device for measuring altitude based on pressure, mounted on a movable body.

Description of the Related Art

Generally, pressure is higher at a lower altitude, and it becomes lower at a higher altitude. Therefore, altitude measuring devices for measuring altitude based on pressure utilizing this nature have been known.

Further, in the conventional altitude measuring device, the measured altitude has been directly related with the pressure. Therefore, not only the change in pressure caused by the change in altitude but also the change in pressure caused by the change in weather are reflected, resulting in the problem that there is much error in the measured altitude. For example, when the altitude measuring device is mounted on a movable body, sometimes the measured altitude value changes even when the movable body is not moving, because of the change in pressure caused by the change in weather. The change in altitude value when the movable body is not in motion is not acceptable to the user, as it raises doubt about satisfactory reliability in measurement.

SUMMARY OF THE INVENTION

Therefore, the present invention was made to solve the above described problem and its object is to provide an altitude measuring apparatus having high reliability in measurement and is convenient for use.

According to the present invention, the altitude measuring apparatus mounted on a movable body includes a sensor for measuring pressure, a circuit for calculating altitude value based on the measured pressure, a circuit determining whether the movable body is stopped, and a control circuit for controlling the circuit for calculating altitude such that the method of calculating the altitude value is changed based on the determined state of the movable body.

According to another aspect of the present invention, the altitude measuring device mounted on a movable body includes a sensor for measuring pressure, a circuit for determining whether the movable body is stopped, a circuit for calculating a correcting value based on an amount of change in pressure measured when the movable body is determined to be in a stopped state, and a circuit for calculating the altitude value based on the calculated correcting value and the measured pressure.

In the altitude measuring device of the present invention, the altitude value is calculated in accordance with the state of the movable body. Therefore, it becomes more convenient for use and more reliable measurement of altitude becomes possible.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a flow chart showing a process performed by a computer for a bicycle in accordance with one embodiment of the present invention.

Fig. 2 is a front view of a computer for a bicycle in accordance with one embodiment of the present invention.

Fig. 3 is a rear view of Fig. 2.

Fig. 4 shows contents displayed on display 53 shown in Fig. 2.

Fig. 5 is a block diagram showing hardware structure of a computer for a bicycle in accordance with one embodiment of the present invention.

Fig. 6 shows a specific example of the process performed in accordance with the flow chart of Fig. 1.

Fig. 7 shows altitude display when bicycle mode is not selected in the computer for the bicycle in accordance with one embodiment of the present invention.

Fig. 8 is an illustration showing the change in altitude display in the bicycle mode of the computer for a bicycle in accordance with one embodiment of the present invention.

DESCRIPTION OF THE PREFERRED EMBODIMENTS

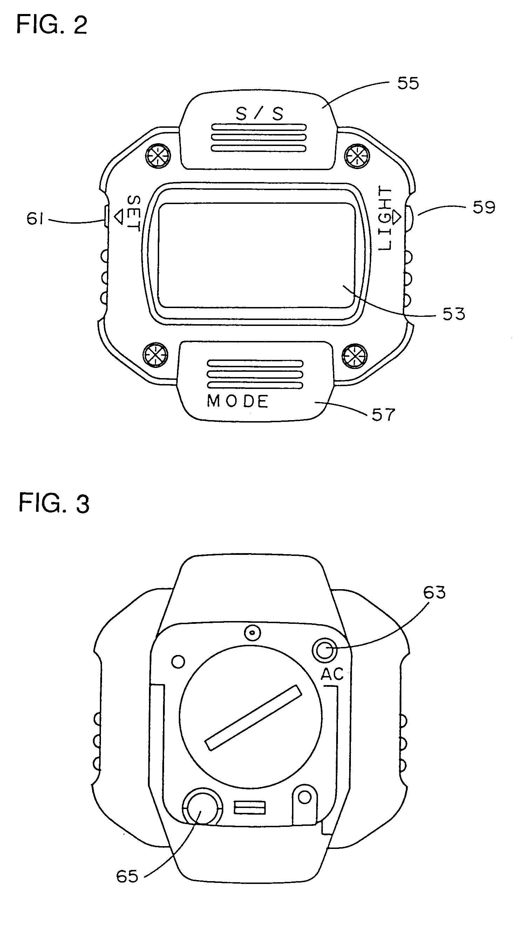

Referring to Figs. 2 and 3, a computer for a bicycle includes a display 53 for displaying altitude, speed, temperature and mode which is presently selected, a light button 59 for illuminating display 53, a set button 61 for setting various data, a start/stop button 55 for inputting start and stop signals for data input, a mode button 57 for switching measurement mode, and an AC (All Clear) button 63 for clearing data.

On the rear surface of the computer for a bicycle, there is provided a sensor cap/filter 65 for protecting the sensor, at a position opposing to a pressure sensor for measuring pressure contained therein.

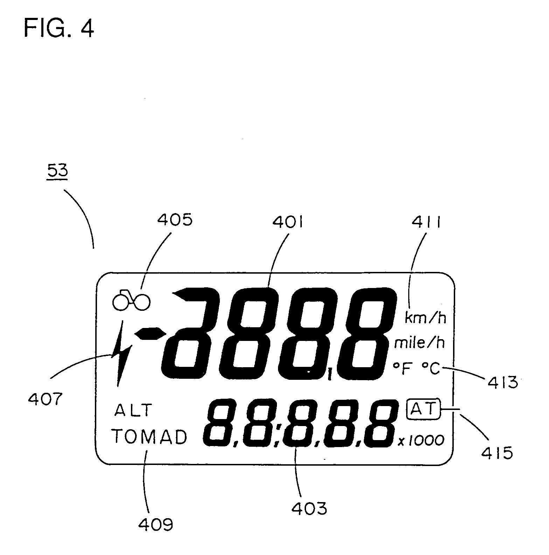

Fig. 4 shows contents displayed on display 53 of Fig. 2.

Referring to the figure, display 53 includes a main display 401 displaying sea level altitude, running speed or the like, a sub display 403 for displaying time, for example, a bicycle mark 405 indicating whether or not the mode of measurement is a bicycle mode, a relative altitude (altitude difference) mark 407 indicating that the mode for altitude measurement is relative altitude mode (that is, a mode in which relative altitude from the starting point is displayed), a mode mark 409 for displaying the present mode, a speed unit 411 for indicating whether the speed unit is km/h or mile/h, a temperature unit 413 indicating whether the temperature unit is Fahrenheit or Centigrade, and an auto mode mark 415 indicating that the set mode is auto mode.

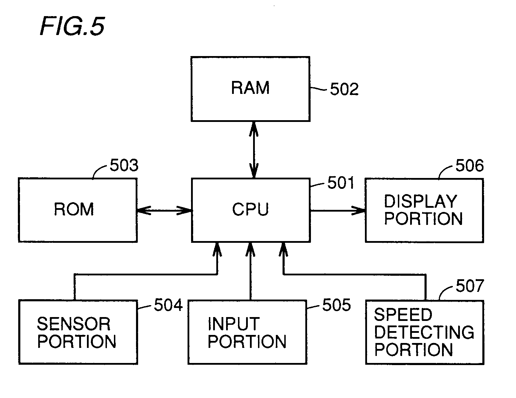

Fig. 5 is a block diagram showing a hardware structure of a computer for a bicycle in accordance with the present invention.

Referring to the figure, the computer for a bicycle includes a CPU 501 for performing various processings, an RAM 502 for temporarily storing data, an ROM 503 for storing programs and constants, a sensor portion 504 including a pressure sensor (ambient pressure sensor), an input portion 505 for data input, a display portion 506 for displaying data, and a speed detecting portion 507 for detecting speed of the bicycle.

The speed detecting portion 507 is a detector consisting of a magnet attached on a spoke of a front wheel of the bicycle, and a magnetic sensor attached on a fork of the bicycle. The magnetic sensor detects passage of the magnet when the wheel rotates, and generates a pulse. The speed of the bicycle is measured based on the time interval between the pulses.

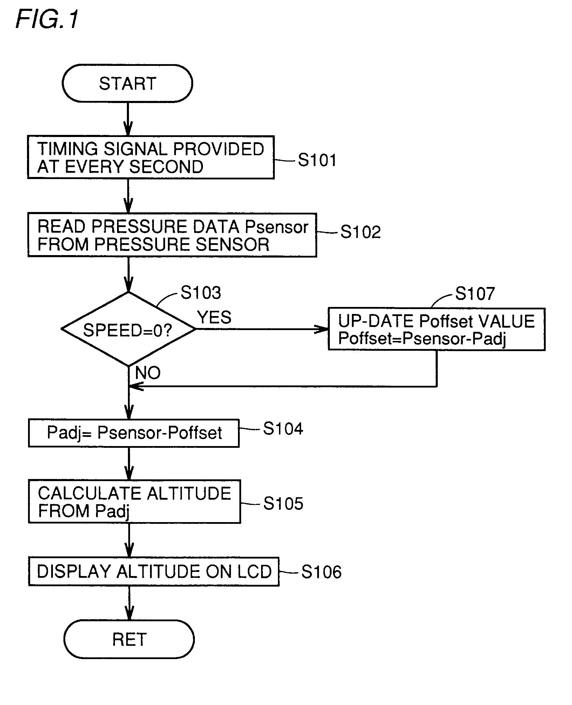

Fig. 1 is a flow chart showing the process performed by the CPU 501 for the computer for a bicycle shown in Fig. 2 to provide measurement/display of the altitude.

When the device is activated, a value of ambient pressure data $P_{sensor}$ provided by the pressure sensor is input as corrected pressure data $P_{adj}$, and "0" is input to the correcting value $P_{offset}$, as initial values.

Referring to the figure, in step S101, a timing signal generated at every second from CPU 501 is detected. The processing starting from step S102 is performed when the timing signal is detected.

In step S102, pressure data $P_{sensor}$ from the pressure sensor included in sensor portion 504 is read.

In step S103, whether the speed detected at speed detecting portion 507 is "0" is determined. If it is YES in step S103, it means that the bicycle is in stopped state. Therefore, in step S107, the correcting value $P_{offset}$ is up-dated in accordance with the equation (1), and the process from step S104 takes place.

$$P_{offset} = P_{sensor} - P_{adj} \qquad (1)$$

In step S104, the pressure $P_{adj}$ corrected in accordance with the following equation (2) is calculated.

$$P_{adj} = P_{sensor} - P_{offset} \qquad (2)$$

In step S105, altitude value H is calculated, based on the corrected pressure data $P_{adj}$. The altitude value H is calculated in accordance with the following equation (3).

$$H = (3.731444 - P_{adj}{}^{0.1902631}) / (0.841728 \times 10^{-4}) \qquad (3)$$

This is the equation representing the relation between pressure and altitude in accordance with ISO2533 (standard atmosphere) based on the international standard atmosphere determined by International Civil Aviation Organization (ICAO).

In step S106, the calculated altitude is displayed on the main display 401 of display 53, and the process is terminated.

If it is NO in step S103, it means that the bicycle is running, and the process from step S104 starts.

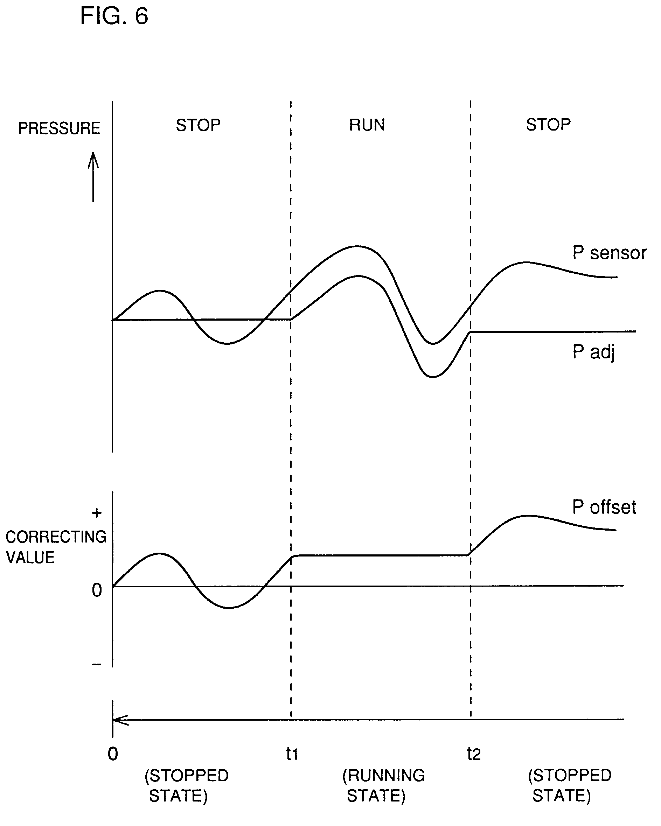

Fig. 6 is a graph showing a specific example of the process in accordance with the flow chart of Fig. 1.

In the graph, the abscissa represents time, and the graph shows changes in pressure data $P_{sensor}$, corrected pressure data $P_{adj}$ and the correcting value $P_{offset}$ at each time. It is assumed that from the time point 0 at which the device is activated until $t_1$, the bicycle is stopped, from time point $t_1$ to $t_2$, the bicycle is running, and from time point $t_2$, the bicycle is stopped.

While the bicycle is running, the value of pressure data $P_{sensor}$ from the pressure sensor changes because of the change in altitude and change in weather. While the bicycle is stopped, the value changes because of the change in weather or the like, not because of the change in altitude. While the bicycle is stopped (from time 0 to $t_1$, and after $t_2$), the corrected pressure data $p_{adj}$ is kept constant, and the correcting value $P_{offset}$ changes in accordance with the change in pressure data $P_{sensor}$ from the pressure sensor. On the other hand, while the bicycle is running, the value of the correcting value $P_{offset}$ is kept constant, and the corrected pressure data $P_{adj}$ changes in accordance with the value of pressure data $P_{sensor}$ from the pressure sensor. In accordance with this process, the altitude value H displayed does not change while the bicycle is not running, and it changes only when the bicycle is running, based on the pressure data $P_{sensor}$ from pressure sensor.

Therefore, the problem of the conventional technique that the displayed altitude value changes while the bicycle is not running can be eliminated, the device becomes more convenient for use and more accurate altitude measurement becomes possible.

By the operation of mode button 57 shown in Fig. 2 by the user, the processing in accordance with the flow chart of Fig. 1 or the conventional processing in which the altitude is measured directly related to the measured pressure can be selected. The mode performing the process shown in Fig. 1 is referred to as the bicycle mode. When the bicycle mode is selected, the bicycle mark 405 on display 53 shown in Fig. 4 is lit, and the bicycle mark 405 is turned off when the conventional processing is selected.

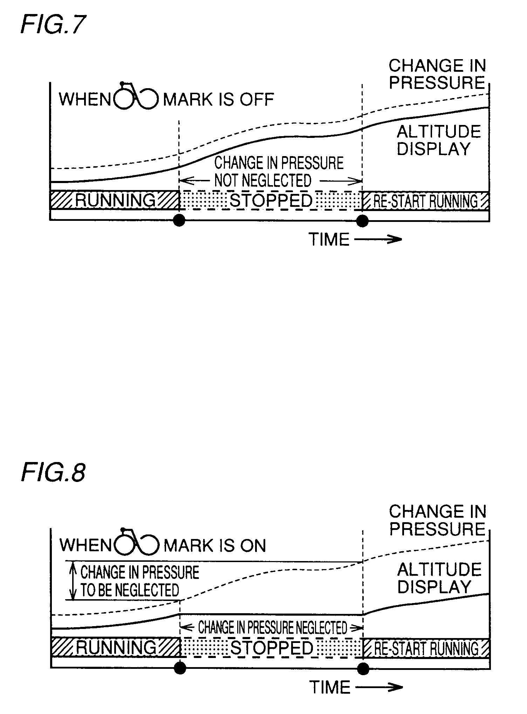

Referring to Fig. 7, when the bicycle mode is not selected, the change in ambient pressure and the change in the altitude display are in direct correspondence no matter whether the bicycle is running or not. Therefore, there is an error when the bicycle is not running because of the change in ambient pressure. Referring to Fig. 8, when the bicycle mode is selected, the change in pressure while the bicycle is not running is neglected, and the altitude display does not change while the bicycle is not running. Therefore, the device is free from the error caused by the change in pressure while the bicycle is not running.

Though a bicycle has been described as an example of the movable body in the above embodiment, the movable body may be a four wheeled vehicle. Further, the present invention may be applied to a portable ambient measuring device.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An altitude measuring device mounted on a movable body, comprising:

   measuring means (504) for measuring pressure;
   calculating means (501) for calculating an altitude value based on said measured pressure;
   determining means (507) for determining whether said movable body is stopped; and
   control means (501) for controlling said calculating means such that method of calculating the altitude value performed by said calculating means is changed based on the result of determination by said determining means.

2. The device according to claim 1, wherein
   said control means controls said calculating means such that altitude value is not changed while said movable body is stopped.

3. The device according to claim 1 or 2, wherein
   said control means includes
   means for calculating, when said movable body is stopped, an amount of change in pressure in the stopped state from said measured pressure, and
   said calculating means calculates the altitude value based on said calculated amount of change in pressure.

4. An ambient measuring device mounted on a movable body, comprising:

   measuring means (S102) for measuring pressure;
   determining means (S103) for determining whether said movable body is stopped;
   first calculating means (S107) for calculating, when it is determined that said movable body is stopped, a correcting value based on an amount of change in the measured pressure; and
   second calculating means (S104, S105) for calculating an altitude value based on said calculated correcting value and said measured pressure.

5.  The device according to claim 4, further comprising

    switching means (57) for switching on/off operation of said first calculating means.

6.  A computer for a bicycle comprising the measuring device according to one of claims 1 to 5.

*FIG.1*

```
              ┌─────────────┐
              │    START    │
              └──────┬──────┘
                     │
      ┌──────────────▼──────────────┐
      │ TIMING SIGNAL PROVIDED       │── S101
      │ AT EVERY SECOND              │
      └──────────────┬──────────────┘
                     │
      ┌──────────────▼──────────────┐
      │ READ PRESSURE DATA Psensor   │── S102
      │ FROM PRESSURE SENSOR         │
      └──────────────┬──────────────┘
                     │        S103
                     ▼                        S107
                  ╱──────╲   YES    ┌───────────────────────┐
                 ╱ SPEED=0?╲────────▶│ UP-DATE Poffset VALUE  │
                 ╲         ╱         │ Poffset=Psensor-Padj   │
                  ╲──────╱           └───────────┬───────────┘
                     │ NO                        │
                     ◀──────────────────────────┘
                     │
      ┌──────────────▼──────────────┐
      │ Padj= Psensor-Poffset        │── S104
      └──────────────┬──────────────┘
                     │
      ┌──────────────▼──────────────┐
      │ CALCULATE ALTITUDE           │── S105
      │ FROM Padj                    │
      └──────────────┬──────────────┘
                     │
      ┌──────────────▼──────────────┐
      │ DISPLAY ALTITUDE ON LCD      │── S106
      └──────────────┬──────────────┘
                     │
              ┌──────▼──────┐
              │     RET     │
              └─────────────┘
```

FIG. 2

FIG. 3

FIG. 4

*FIG.5*

# FIG. 6

**FIG.7**

WHEN 🚲 MARK IS OFF

CHANGE IN PRESSURE

ALTITUDE DISPLAY

CHANGE IN PRESSURE
← NOT NEGLECTED →

RUNNING | STOPPED | RE-START RUNNING

TIME ⟶

**FIG.8**

WHEN 🚲 MARK IS ON

CHANGE IN PRESSURE

CHANGE IN PRESSURE
TO BE NEGLECTED

ALTITUDE DISPLAY

← CHANGE IN PRESSURE NEGLECTED →

RUNNING | STOPPED | RE-START RUNNING

TIME ⟶

European Patent Office

**EUROPEAN SEARCH REPORT**

Application Number

EP 96 10 4362

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-32 32 272 (TELDIX GMBH) 1 March 1984 * the whole document * --- | 1-5 | G01C5/06 |
| X | US-A-4 694 694 (VLAKANCIC CONNOR G ET AL) 22 September 1987 * abstract * * column 2, line 35 - line 47; claim 1 * --- | 1-6 | |
| X | WO-A-91 02944 (PEET BROS COMPANY INC) 7 March 1991 * abstract * * page 8, paragraph 3 - paragraph 4 * * page 15, paragraph 2 - page 16; claim 17 * --- | 1-6 | |
| A | PATENT ABSTRACTS OF JAPAN vol. 013, no. 329 (P-904), 25 July 1989 & JP-A-01 094210 (Y N S:KK), 12 April 1989, * abstract * ----- | 1-6 | |
| | | | TECHNICAL FIELDS SEARCHED (Int.Cl.6) |
| | | | G01C |

The present search report has been drawn up for all claims

| Place of search | Date of completion of the search | Examiner |
|---|---|---|
| THE HAGUE | 25 June 1996 | Hunt, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)